# EUROPÄISCHE PATENTSCHRIFT

(11) **EP 1 570 716 B1**
(45) Veröffentlichungstag und Bekanntmachung des Hinweises auf die Patenterteilung: **30.07.2008**
(21) Anmeldenummer: 05004656.4
(22) Anmeldetag: 03.03.2005
(51) Int. Cl.: A01C 7/12

(54) **Landwirtschaftliche Dossiervorrichtung**
Agricultural dosing apparatus
Appareil de dosage agricole

(30) Priorität: 05.03.2004 DE 102004010730
(43) Veröffentlichungstag der Anmeldung: 07.09.2005
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Brüggemann, Klaus, 27777 Ganderkesee (DE)

(56) Entgegenhaltungen:
- FR-A- 1 320 793
- FR-A- 2 482 410
- US-A- 1 712 797
- US-A- 2 569 421
- US-A- 3 048 132
- US-A- 4 131 221
- US-A- 5 024 173

## Beschreibung

Eine derartige Verteilvorrichtung ist beispielsweise in der DE 195 22 229 C2 beschrieben. Bei dieser landwirtschaftlichen Verteilvorrichtung weist das Dosiergerät ein Gehäuse auf, in dem auswechselbare Zellenräder gelagert sind. Seitlich des Gehäuses sind Lagereinheit die das Gehäuse verschließen, angeordnet. In diesen Lagereinheiten ist die den Zellenrädern zugeordnete Antriebswelle gelagert. Zum Austausch der auswechselbaren Zellenräder muss zumundest eine Lagereinheit von dem Gehäuse abgenommen werden. Anschließend ist das Zellenrad mit der als Vielkantwelle ausgebildeten Antriebswelle aus dem Gehäuse herauszunehmen und gegen ein anderes Zellenrad mit Vielkantwelle auszutauschen. Durch Ziehen an der Vielkantwelle ist das Zellenrad aus dem Gehäuse herauszuziehen. Es wird also die Vielkantwelle ausgebildete Antriebswelle mit dem Zellenrad ausgewechselt.

Die US 41 31 221 zeigt eine Dosiervorrichtung für eine landwirtschaftliche Verteilmaschine. Diese Dosiervorrichtung weist das auf der Sechskantwelle verschiebbar angeordnete Dosierrad auf. Dieses Dosierrad ist zwischen zwei Füllstücken, die drehbar und verschieblich in dem Gehäuse angeordnet sind, angeordnet. Die Antriebswelle ist in dem im linken Gehäusebereich durch einen auf der Antriebswelle angeordneten Sicherungsring nach rechts unverschiebbar gesichert und mit dem Wellenansatz in dem Gehäuse drehbar gelagert. Auf dem dem Ende abgewandten Ende der Antriebswelle ist das Gewinde angeordnet. Auf diesem Gewinde ist eine Mutter mit einem Handgriff angeordnet. Die Mutter kann auf dem Gewinde in Längsrichtung der Antriebswelle verstellt werden. Hierdurch werden in Zusammenwirken mit der Feder die Füllstücke sowie das Dosierrad verschoben, um die Dosierbreite des Dosierrades einzustellen.

Der Erfindung liegt die Aufgabe zugrunde, einen erleichterten Austausch der auswechselbaren Zellenräder, insbesondere das Herausziehen der auswechselbaren Zellenräder aus dem Gehäuse zu verbessern, wenn die Antriebswelle nicht mit den Zellenrädern ausgewechselt wird.

Diese Aufgabe wird erfindungsgemäß durch das kennzeichnende Merkmal des Patentanspruches 1 gelöst. Infolge dieser Maßnahmen wird nach dem Entfernen der seitlichen Abdeckung des Gehäuses das Zellenrad durch das Federelement zumindest teilweise aus dem Gehäuse herausgedrückt, so dass das auswechselbare Zellenrad sicher von außen anzufassen ist.

Eine preiswerte Ausgestaltung eines auswechselbaren Zellenrades ergibt sich dadurch, dass das auswechselbare Zellenrade auf der Antriebswelle verschiebbar angeordnet ist. Hierdurch ist es nicht erforderlich, die Antriebswelle auszutauschen, sondern das Zellenrad ist verschiebbar auf der Antriebswelle angeordnet, so dass nur das Zellenrad ausgetauscht werden muss.

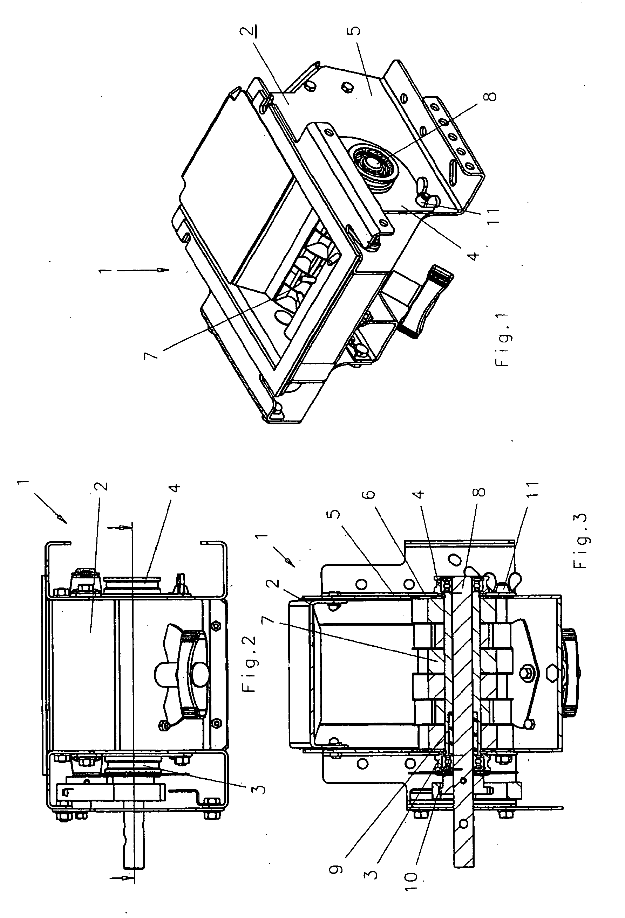

Weiteren Einzelheiten der Erfindung sind den übrigen Unteransprüchen, der Beispielsbeschreibung und den Zeichnungen zu entnehmen. Hierbei zeigen
- Fig. 1: das Dosiergerät in perspektivischer Darstellung,
- Fig. 2: das Dosiergerät in der Vorderansicht,
- Fig. 3: das Dosiergerät im Schnitt,
- Fig. 4: das Dosiergerät in perspektivischer Darstellung mit abgenommener Seitenwand und ausgeworfenem Zellenrad,
- Fig. 5: das Dosiergerät gemäß Fig. 4 in der Draufsicht und
- Fig. 6: das Dosiergerät gemäß Fig. 4 im Schnitt.

Das Dosiergerät 1 ist unter dem trichterförmigen Auslauf eines nicht dargestellten Vorratsbehälters einer landwirtschaftlichen Verteilvorrichtung, beispielsweise einer pneumatischen Sämaschine zum dosierten Ausbringen von körnigem Material, wie Saatgut unterschiedlicher Größe und Art, chemischen Granulaten, angeordnet. Das Dosiergerät 1 weist das Gehäuse 2 mit den beiden seitlich des Gehäuses 2 angeordneten Lagereinheiten 3 und 4 auf. Auf der einen Seite ist die Lagereinheit 4 abnehmbar befestigt. Diese abnehmbare Lagereinheit 4 weist die Seitenwandung 5 auf, die die seitliche Öffnung 6, durch welches das Zellenrad 7 in das Gehäuse 2 eingebracht und herausgenommen werden kann, auf. Die Antriebswelle 8 des Dosiergerätes 1 ist axial unverschieblich in der Lagereinheit 3, die der seitlichen Öffnung 6 abgewandt ist, gelagert. Von dieser Seite aus wird die als Vielkantwelle 8, im Ausführungsbeispiel als Quadratwelle ausgebildete Antriebswelle 8 über eine nicht dargestellte Kraftquelle und Antriebseinrichtung angetrieben. Das Zellenrad 7 besteht aus mehreren Zellenradelementen, die zu einem Dosierblock zusammengefasst sind. Die Vierkantwelle 8 ist axial unverschiebbar auf der einen Seite des Gehäuses 1 mittels der Lagereinheit 3 in dem Gehäuse 1 gelagert. Auf diese Antriebswelle 8 ist das auswechselbare Zellenrad 7 aufschiebbar. Dem auswechselbaren Zellenrad 7 ist ein Federelement 9 zugeordnet und zwar derart, dass das herausnehmbare Zellenrad 7 in Richtung der seitlichen Öffnung 6 gedrückt wird. Hierzu weist die Antriebswelle 8 ein Anschlagelement 10 auf. Das Federelement 9 ist zwischen dem Anschlagelement 10 und dem Zellenrad 7 angeordnet. Die abnehmbare Lagereinheit 4 ist mit den Verbindungselementen 11 an dem Gehäuse 11 seitlich zu befestigen. Über diese Lagereinheit 4 wird das Zellenrad 7 gegen Kraft der Feder 9 in dem Gehäuse 1 in seiner Position gehalten.

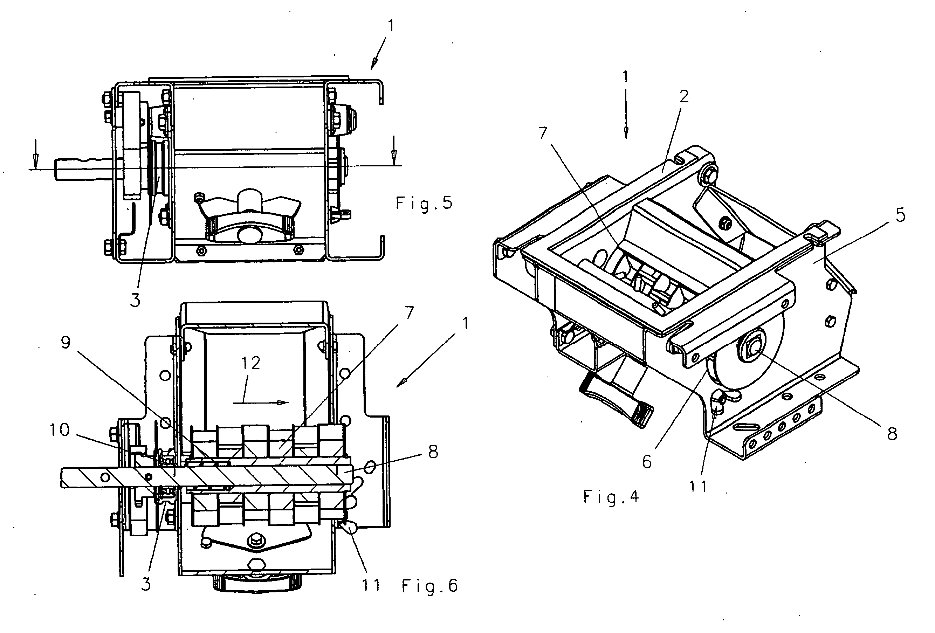

Wenn das Zellenrad 7 aus dem Gehäuse entnommen werden soll, um gegen ein anderes ausgewechselt zu werden, werden die Verbindungselemente 11 gelöst und die seitliche Lagereinheit 4 abgenommen. Durch die Feder 9 wird das herausnehmbare Zellenrad 7 in Pfeilrichtung 12 in die in Fig. 4 bis 6 dargestellte Position aus dem Gehäuse 1 etwas herausgedrückt. In dieser herausgedrückten Position kann das Zellenrad 7 von außen, wie die Fig. 4 bis 6 zeigen, sicher von Hand angefasst werden und ganz aus dem Gehäuse 1 von der Antriebswelle 8 abgezogen werden. Anschließend kann ein anderes Zellenrad eingesetzt werden. Gegen die Kraft der Feder 9 wird mittels der seitlichen Lagereinheit 4 und den Verbindungselementen 11 das Zellenrad 7 im Gehäuse 1 in der entsprechenden Position gehalten.

## Patentansprüche

1. Landwirtschaftliche Verteilvorrichtung zum dosierten Ausbringen von körnigem Material, wie Saatgut unterschiedlicher Größe und Art, chemischen Granulaten, etc. mit mindestens einem Dosiergerät (1) mit einem oder mehreren auswechselbaren Zellenräder (7), die in einem Gehäuse (2) angeordnet sind und das aus dem Zellenrad (7) abgegebene Material zumindest einer Verteileinrichtung zuleiten, wobei in dem Gehäuse (2) eine Antriebswelle drehbar gelagert ist, wobei auf der Antriebswelle das Zellenrad (7) angeordnet ist, wobei das Gehäuse(2) zumindest eine seitliche Öffnung (6) zur Herausnahme und Einbringen der auswechselbaren Zellenräder (7) aufweist, wobei die Zellenräder (7) durch die seitliche Öffnung herausnehmen und einzubringen sind, wobei die seitliche Öffnung (6) von der seitlich an dem Gehäuse (2) mit den Verbindungselementen (11) befestigten Lagereinheit (4) abgedeckt ist, **dadurch gekennzeichnet, dass** dem auswechselbaren Zellenrad (7) zumindest ein Federelement (9) zugeordnet ist und derart angeordnet ist, dass das herausnehmbare Zellenrad (7) in Richtung (12) der seitlichen Öffnung (6) gedrückt wird.

2. Verteilvorrichtung nach Anspruch 1, **dadurch gekennzeichnet, dass** die Antriebswelle (8) ein Anschlagelement (10) aufweist, dass das Federelement (9) zwischen dem Anschlagelement (10) und dem Zellenrad (7) angeordnet ist.

3. Verteilvorrichtung nach Anspruch 1, **dadurch gekennzeichnet, dass** die Antriebswelle (7) axial unverschieblich auf einer Seite des Gehäuses (2) mittels einer Lagerung in dem Gehäuse (2) gelagert ist, dass das auswechselbare Zellenrad (7) auf die Antriebswelle (8) verschiebbar angeordnet ist.

## Claims

1. Agricultural distributing apparatus for the metered distribution of granular material, such as seeds of a variable dimension and type, chemical granules, etc., said apparatus having at least one metering appliance (1) provided with one or more interchangeable bucket wheels (7), which are disposed in a housing (2) and feed the material, released from the bucket wheel (7), to at least one distributing means, a drive shaft being rotatably mounted in the housing (2), the bucket wheel (7) being disposed on the drive shaft, the housing (2) having at least one lateral opening (6) for the removal and introduction of the interchangeable bucket wheels (7), the bucket wheels (7) having to be removed and introduced through the lateral opening, and the lateral opening (6) being covered by the bearing unit (4), which is secured laterally on the housing (2) with the connecting members (11), **characterised in that** at least one resilient member (9) is associated with the interchangeable bucket wheel (7) and is disposed in such a manner that the removable bucket wheel (7) is urged in the direction (12) of the lateral opening (6).

2. Distributing apparatus according to claim 1, **characterised in that** the drive shaft (8) has a stop member (10), and **in that** the resilient member (9) is disposed between the stop member (10) and the bucket wheel (7).

3. Distributing apparatus according to claim 1, **characterised in that** the drive shaft (7) is mounted in the housing (2) in an axially non-displaceable manner on one side of the housing (2) by means of a mounting support, and **in that** the interchangeable bucket wheel (7) is displaceably disposed on the drive shaft (8).

## Revendications

1. Appareil distributeur agricole pour la distribution dosée de produits en grains tels que des semences de dimensions et de natures différentes, des granulés chimiques, etc..., comportant au moins un appareil de dosage (1) ayant une ou plusieurs roues alvéolaires (7) interchangeables, installées dans un boîtier (2) et le produit, distribué par la roue alvéolaire (7), est fourni à au moins une installation de distribution,
le boîtier (2) comportant un arbre d'entraînement monté à rotation, portant la roue alvéolaire (7),
le boîtier (2) ayant au moins une ouverture latérale (6) pour extraire et introduire des roues alvéolaires interchangeables (7),
les roues alvéolaires (7) s'extrayant et s'introduisant par l'ouverture latérale,
l'ouverture latérale (6) étant couverte par l'unité de palier (4), fixée latéralement au boîtier (2) avec des éléments de liaison (11),
**caractérisé en ce qu'**
au moins un élément à ressort (9) est associé à la roue alvéolaire interchangeable (7) et cet élément à ressort est installé pour que la roue alvéolaire (7) extractible soit poussée en direction (12) de l'ouverture latérale (6).

2. Appareil distributeur selon la revendication 1,
**caractérisé en ce que**
l'arbre d'entraînement (8) comporte un élément de fixation (10) et l'élément de ressort (9) est installé entre l'élément de fixation (10) et la roue alvéolaire (7).

3. Appareil distributeur selon la revendication 1,
**caractérisé en ce que**
l'arbre d'entraînement (7) est installé de façon bloquée axialement sur un côté du boîtier (2) à l'aide d'un palier du boîtier (2) et la roue alvéolaire (7) interchangeable est installée de manière coulissante sur l'arbre d'entraînement (8).
